# EUROPEAN PATENT SPECIFICATION

(11) **EP 2 822 794 B1**
(45) Date of publication and mention of the grant of the patent: **23.12.2015**
(21) Application number: 13718876.9
(22) Date of filing: 12.04.2013
(51) Int. Cl.: B60K 15/04, B64D 37/16, F16L 37/30

(54) **REFUELLING COUPLING**
BETANKUNGSKUPPLUNG
RACCORD DE RAVITAILLEMENT EN CARBURANT

(30) Priority: 09.03.2012 GB 201204243; 20.04.2012 GB 201207053
(43) Date of publication of application: 14.01.2015
(73) Proprietor: Remfry, Leigh Maxwell, Waterlooville, Hampshire PO7 6ND (GB)
(72) Inventor: Remfry, Leigh Maxwell, Waterlooville, Hampshire PO7 6ND (GB)
(74) Representative: Brooks, Nigel Samuel
(86) International application number: PCT/GB2013/000168
(87) International publication number: WO 2013/132215

(56) References cited:
- EP-A1- 1 526 319
- EP-A1- 2 186 669
- WO-A2-2012/020313
- DE-A1-102008 033 747

## Description

The present invention relates to a refuelling coupling.

Road vehicles are usually refuelled with a so-called "gravity" refuelling nozzle to which fuel is pumped under pressure, but from which the fuel flows under gravity into a vehicle's filler neck or refuelling coupling.

Many air-borne and some other vehicles are refuelled with a pressure refuelling nozzle, which is fluid-tightly connected to the vehicle's refuelling coupling.

Some vehicles do indeed include both types of refuelling coupling. This is expensive, bulky and introduces a weight penalty on an aircraft.

A refuelling coupling according to the preamble of claim 1 is known from WO 2012/020313 A2.

As used herein, the term coupling is used to mean the vehicle side connector; whereas the term nozzle is used to mean the refuelling vessel and refuelling side connector. We are aware that this terminology is not universal and that in other regions the term coupler is used to mean the hose side connector.

Also as used herein, the term dry-break is used to mean that the coupling and nozzle are adapted to be both sealed when not connected to each other.

The object of the present invention is to provide a combined pressure and gravity refuelling coupling.

According to a first aspect of the invention there is provided a refuelling coupling having:
- an annular member,
- a fitting on the annular member complementary to a pressure refuelling nozzle and
- a displaceable dry-break member in the coupling for normally sealing the coupling via a seal between the annular member and the dry-break member, the dry-break member being displaceable from its sealing position on connection of a pressure refuelling nozzle, the dry-break member including:

- an aperture in the displaceable dry-break member and
- a subsidiary displaceable member carried by the dry-break member, this member normally closing the aperture and being displaceable by introduction of a gravity refuelling nozzle into the aperture.

Normally the main displaceable dry-break member will be translationally displaceable against a return spring. Such an arrangement is possible for the subsidiary displaceable member. However in the interests of allowing the "gravity" nozzle to penetrate past the subsidiary displaceable member, the latter is preferably pivotally connected to the main dry-break member. Conveniently, the pivot is provided with a spring for returning the subsidiary member to its normally closed position. Preferably the main and subsidiary members are adapted for sealing of the subsidiary member to the main member, whereby full dry-break operation is available when pressure refuelling.

Insofar as the coupling may be provided separate from a fuel tank, that is in a vehicle skin, and/or the tank may be flexible, the main dry-break member is preferably mounted on rods extending from fitting and having springs for returning the dry-break member back the to the fitting and a hose is provided around the rods for connection to both the fitting and the tank. The inner ends of the rods can be carried on the annular member or at least a sleeve being an integral extension of the annular member or on an abutment member in the form of a spider or a ring.

Preferably the coupling is provided with an air vent having a float arranged to close as the tank fills for causing back-pressure in the connector when the tank is full. Additionally an airflow restricter is preferably provided in an air vent duct. The restricter is preferably adapted to open to a limited extent to accommodate gravity refuelling air escape and to a greater extent to allow an increased air flow in the case of pressure refuelling, with its great fuel flow.

According to a second aspect of the invention, there is provided an adapter for a refuelling coupling as claimed in any preceding claim, the adapter being generally tubular and having:
- a fitting at one end complementary to a pressure refuelling nozzle,
- a fitting at the other end complementary to that on annular member and
- a shuttle extending between the ends of the adapter, the shuttle being adapted and arranged to be displaced by a displacement member of the pressure refuelling nozzle and to displace the displaceable dry-break member.

To help understanding of the invention, a specific embodiment thereof will now be described by way of example and with reference to the accompanying drawings, in which:
Figure 1 is a cross-sectional side vi ew of a refuelling coupling of the invention installed in the skin of a vehicle (not shown) and connected to a fuel tank;
Figure 2 is a perspective view of the coupling as such;
Figure 3 is a side view of the coupl ing of Figure 2;
Figure 4 is a view similar to Figure 1 in preparation for refuelling with a gravity nozzle;
Figure 5 is a similar view during gravity nozzle refuelling;
Figure 6 is another such view in preparation for pressure nozzle refuelling;
Figure 7 is a similar view during pressure nozzle refuelling;
Figure 8 is a view similar to Figure 1 of a varied refuelling coupling;
Figure 9 is a similar view during gravity nozzle refuelling;
Figure 10 is a similar view during pressure nozzle refuelling;
Figure 11 is another view showing the finish of pressure nozzle refuelling;
Figure 12 is a partially sectioned, perspective view of another refuelling coupling of the invention;
Figure 13 is a partially sectioned vie w of an adapter for a refuelling coupling of the invention
Figure 14 , Figure 15 and Figure 16 are cross-sectional side views in the attachment and refuelling use of a pressure refuelling nozzle to the refuelling coupling of Figure 12 via the adapter of Figure 13 and
Figure 17 is a variant of the coupling of Figure 2..

Referring to the drawings, the refuelling coupling there shown has an annular fitting 1 having a bore 2, bayonet lugs 3 and slots 4 suiting it for connection to a pressure filling nozzle 50. A dry-break member 5 is provided within the annular fitting, normally sealing to it with the aid of an O-ring seal 6. When the pressure filling nozzle is fitted, the dry-break member is depressed allowing fuel to flow. In this respect, the refuelling coupling is conventional.

In accordance with the invention, the dry-break member has a central aperture 11, normally closed by a side pivoted flap 12. The pivot 14 is at a pin 15 carried in lugs 16 on the underside of a central disc 17 having the aperture 11. The flap has a finger 17 projecting between the lugs and having the pin passing through it. A spring 18 is carried on the pin and normally biases the flap into its closed position parallel with the disc. An O-ring 19 is carried on the flap whereby should unusual forces displace fuel against the flap it does not leak.

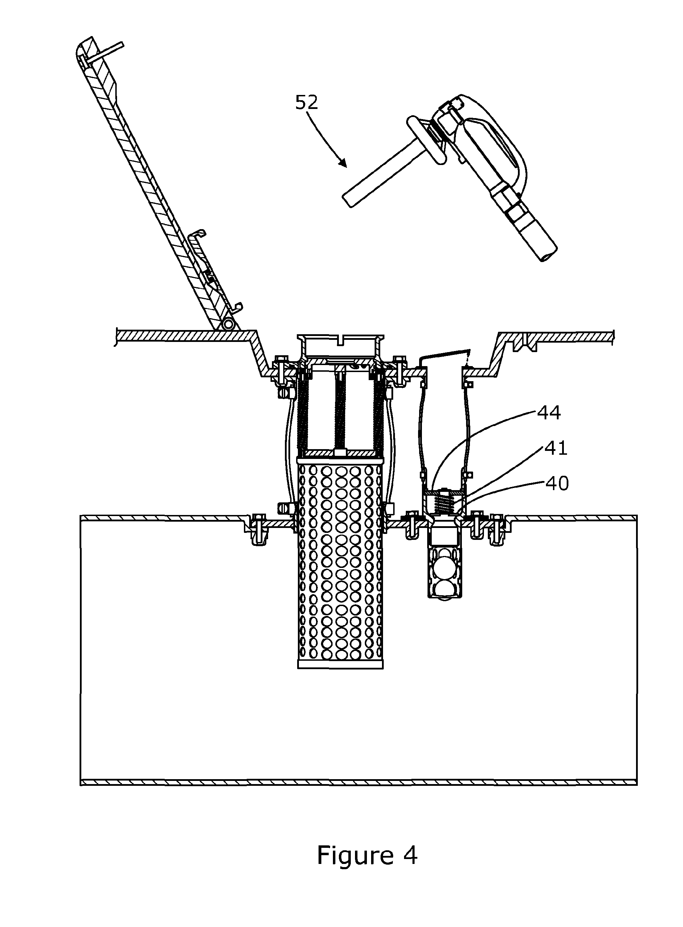

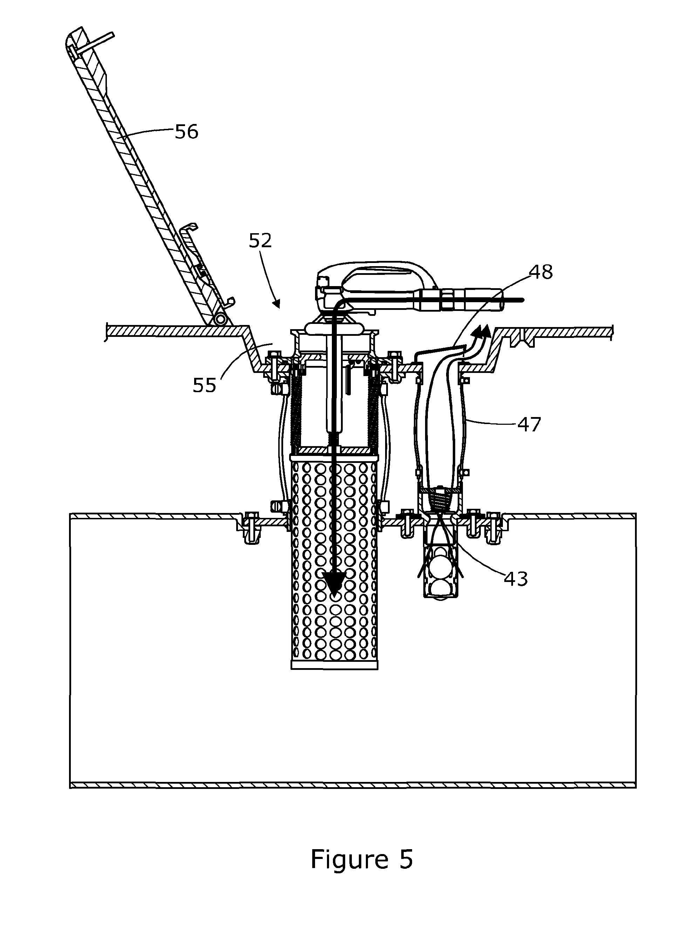

For gravity nozzle fuelling, as shown in Figure 4 & 5, a gravity fuelling nozzle 52 is placed against the flap and pushed in against its spring. Refuelling can now occur.

The fitting 1 has three rods 21 secured to the underside of a fixture rim 22. The dry-break member has three projections 23 with bores 24 through which the rods project. Lower ends of the rods are fast in a spider 25. The rods carry springs 211 which normally bias the dry-break member into sealing contact with the fitting 1.

For pressure refuelling, the pressure refuelling nozzle 50 is latched on and operated to cause its dry-break member 501 to physically displace the member 5 for flow of fuel around it. Should de-fuelling be required through a pressure refuel nozzle, in the case of the vehicle having the refuelling coupling, it should be noted that the flap12/disc17 does not inhibit this because scavenged fuel can flow around the dry break member 5 which is displaced from its seat in the annular fitting 1.

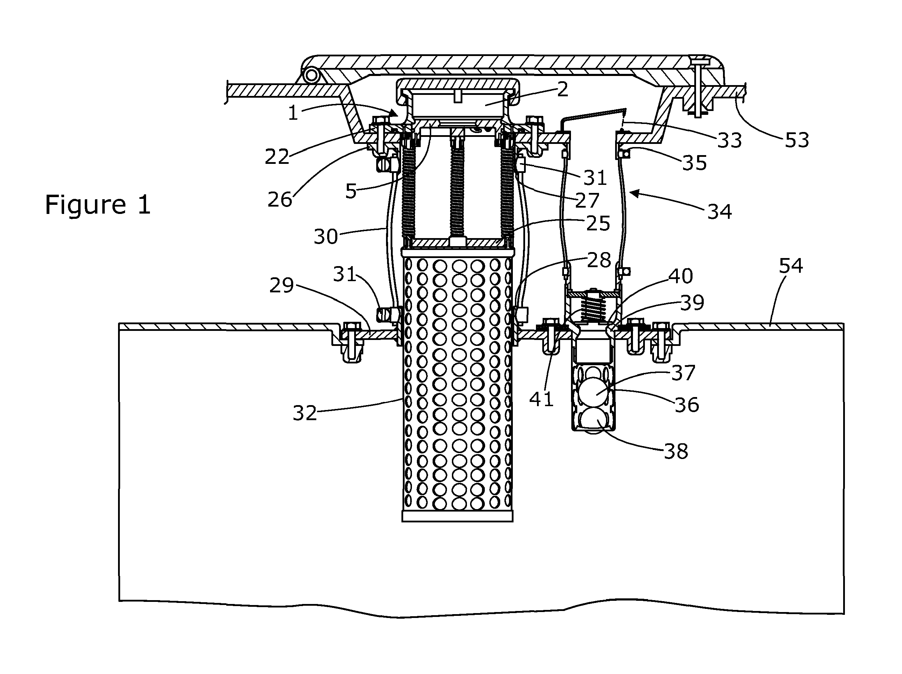

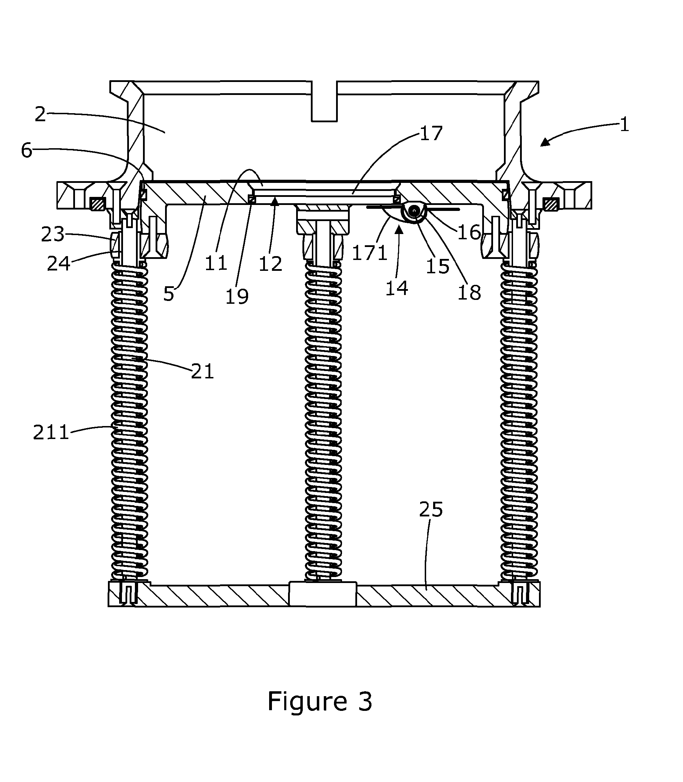

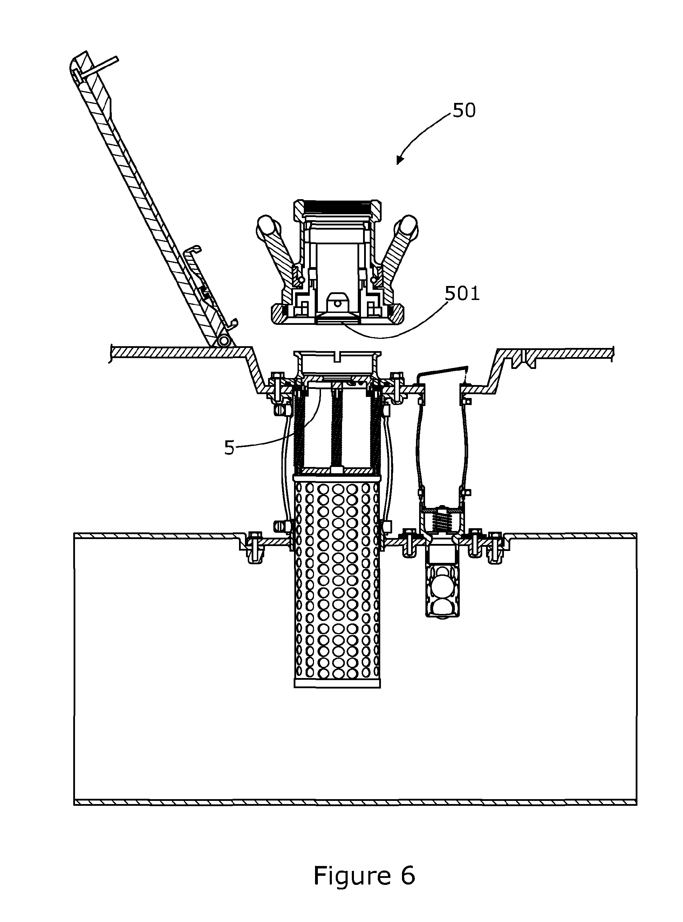

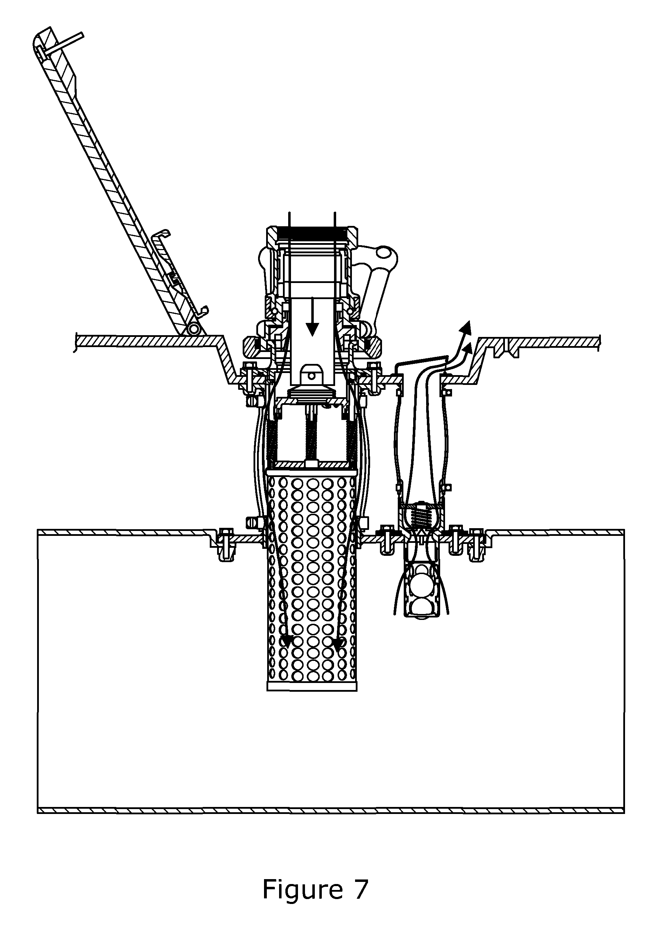

In the embodiment of Figures 1 to 7, the fitting is fast in the skin 53 of a vehicle, with the skin being sandwiched between the rim 22 and a ring 26. The ring has a rim 27. A similar rim 28 is provided on a closure plate 29 of a fuel tank 54. Extending between the lips 27 & 28 is a flexible hose 30, held to the rims by screwed bands 31. Thus fuel flow is directed into the tank which is allowed some deflection within the skin 53 or vice versa. A strainer 32 is shown extending from the spider 25 into the tank.

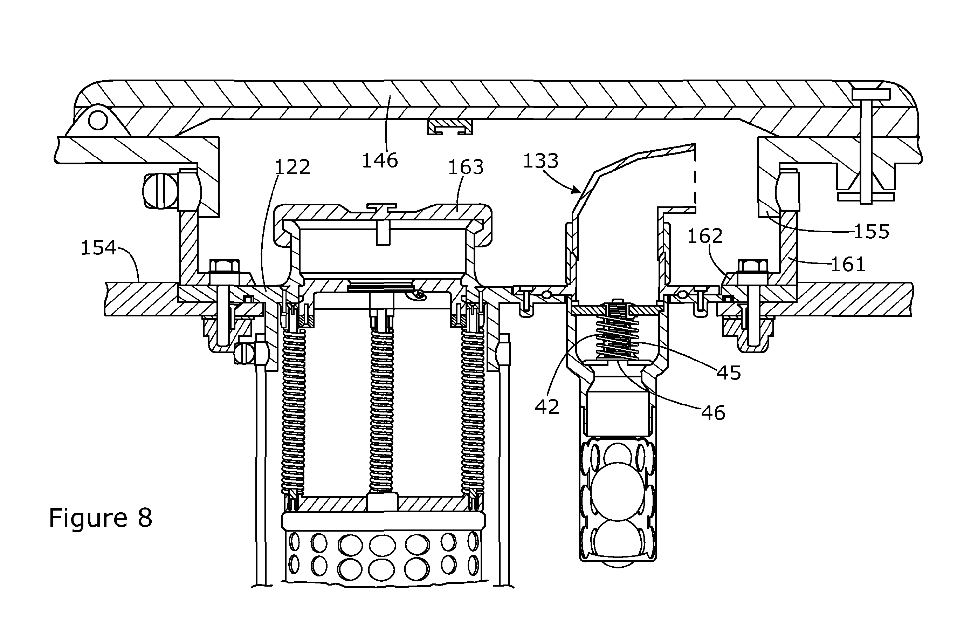

Also mounted in the tank plate 29 is an air vent 33 in the form of a duct 34 secured via a rim 35. Tube carries an apertured ball retainer 36 which retains a buoyant ball 37 and a dense ball 38. The latter is for forcing the buoyant ball to seal in a vehicle inversion. The buoyant ball seals during refuelling by floating against a seat 39 above the cage. Above the seat, an airflow limiting disc 40 is urged against the seat by a spring 41. The disc is open centrally 43 and carried on an apertured sleeve 42 carrying the spring 41. The sleeve is secured by a cross pin 44, against which the spring reacts. Internally of the sleeve a second spring 45 urges a inner sealing disc 46 into the central opening 43 of the disc 40. Features 42, 45 & 46 are shown in Figure 8.

During gravity nozzle filling air pressure lifts the inner disc 46 against the light spring 45 and flows through the disc and up through the apertures 42 in the sleeve. Thus a pressure marginally above ambient is maintained in the tank, for quick closure of the nozzle's trigger when the tank is filled to the extent that the buoyant ball 37 seals against the seat 39.

When pressure nozzle filling, the air flow is too great for the apertured sleeve and the air pressure in the tank lifts the disc 40. The latter with the action of its spring 41 keeps the pressure just above ambient, for again causing the fuel flow to be shut off by detection of pressure rise when the buoyant float seals.

To vent tank air to atmosphere, a hose 47 extends up from the vent 33 via a deflector 48. This and the fitting 1 are housed in a depression 55 in the skin. A hinged closure 56 is provided for closing the depression, whereby the external lines of the vehicle are little disturbed by the single refuelling fitting of the invention.

Alternatively to the above use of hoses, the fitting can be fast with a tank via its rim 22.

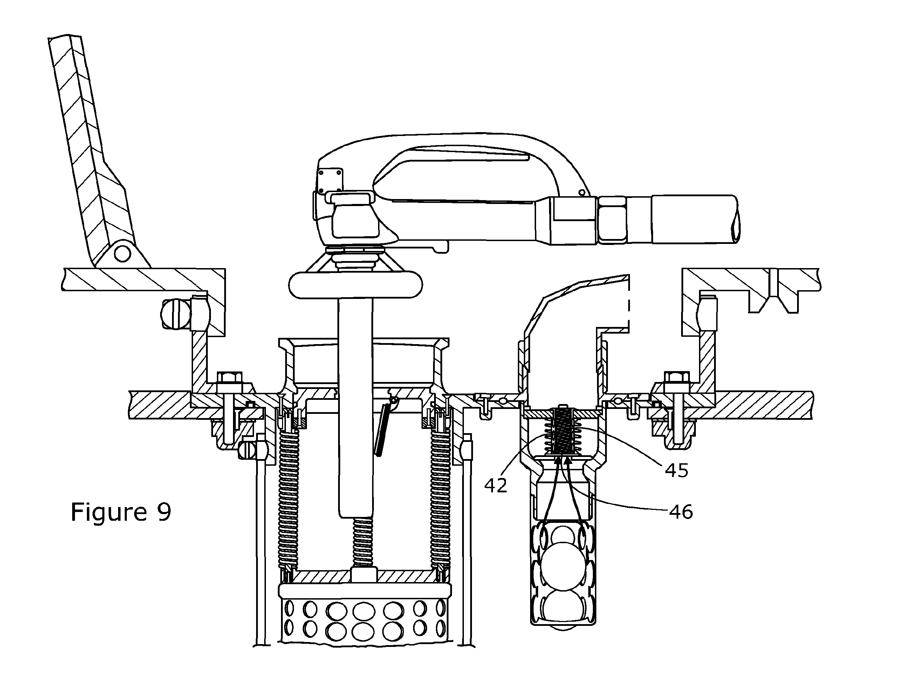

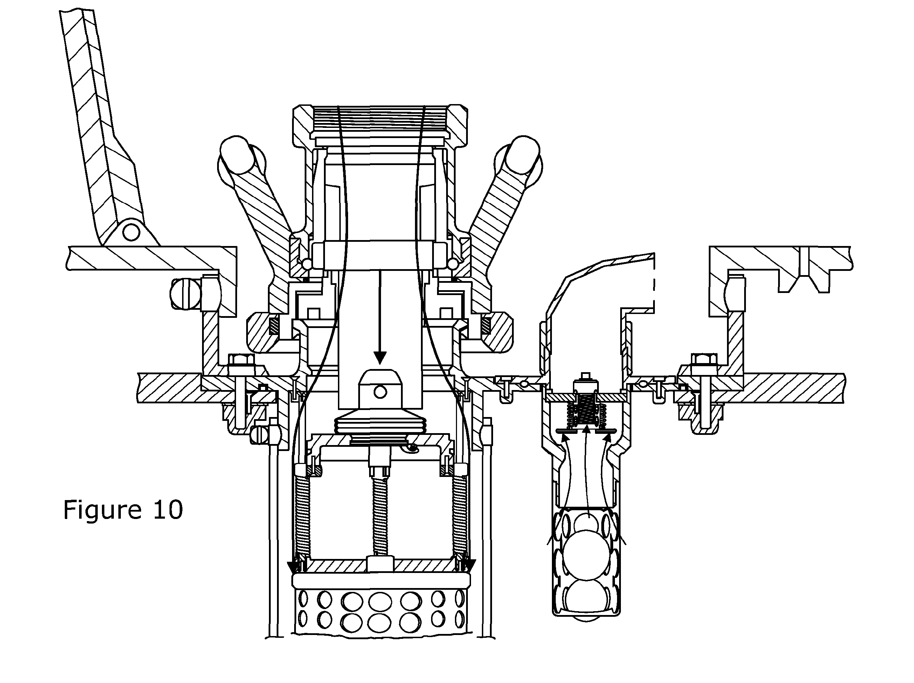

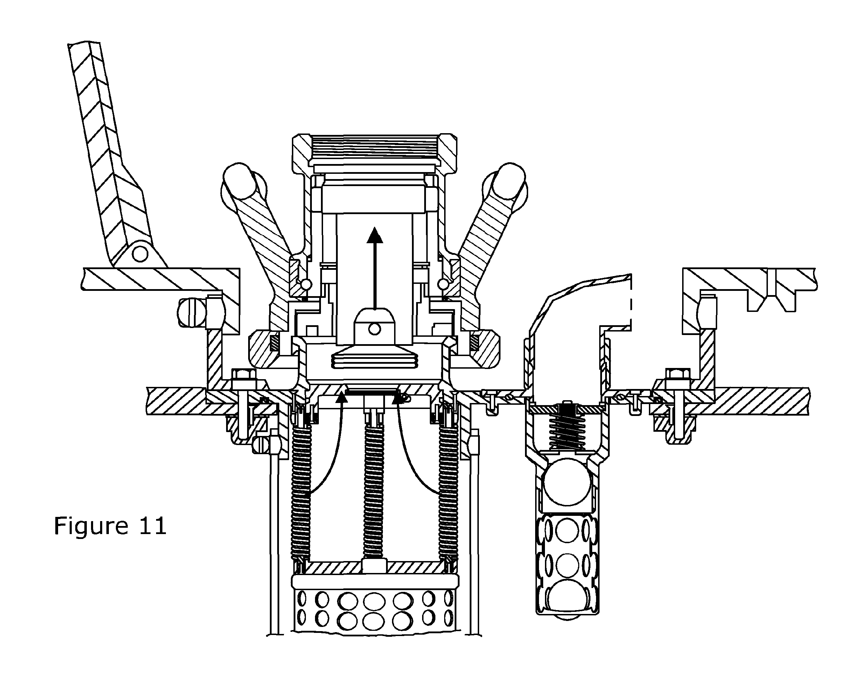

The invention is not intended to be restricted to the details of the above described embodiment. For instance, as shown in Figures 8 to 11, the rim 22 of the fitting 1 can be more extensive as a plate 122 having the air vent 133 attached directly to it. Also in this arrangement, the skin 53 of the vehicle has an in-turned lip 155 to which a collar 161 is attached. The collar has a radially inwards extending flange 162. This is secured to the plate 122 and to the fuel tank 154. A detail shown in these figures is a cap 163 for closing the fitting once the refuelling nozzle is removed. This is in addition to the hinged closure 146, which closes over the cap when fitted to the fitting.

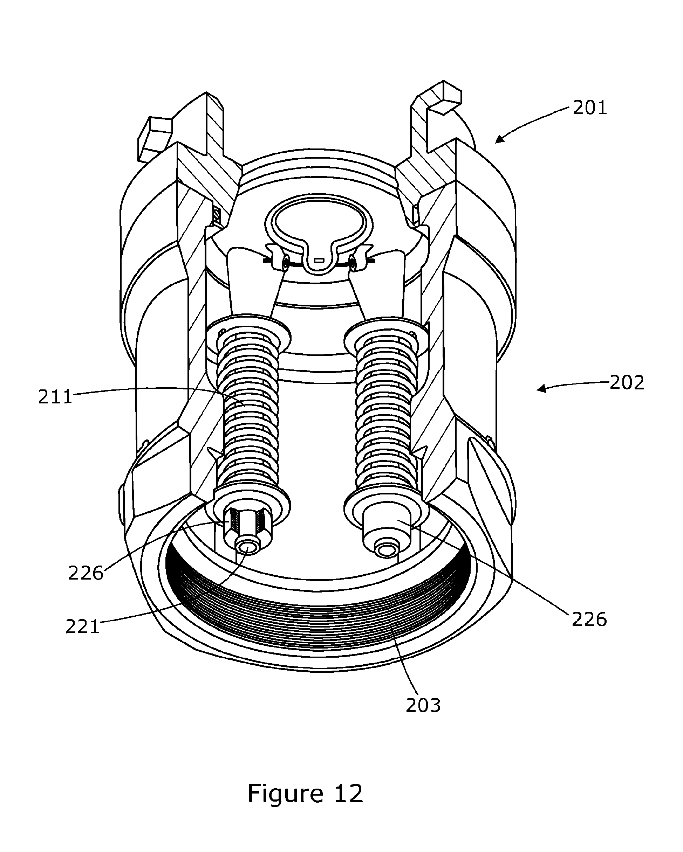

Further, as shown in Figure 12, the ring or at least lugs 226 carrying the end of the rods, the hose and the lip can be integral part of the fitting 201 adapted for connection to a pressure filling nozzle, or at least these features can be provided as two parts, namely the fitting 201 and a main sleeve 202 housing the rods 221 and springs 211. In this variant, the main sleeve is threaded 203 for connection to fuel tank.

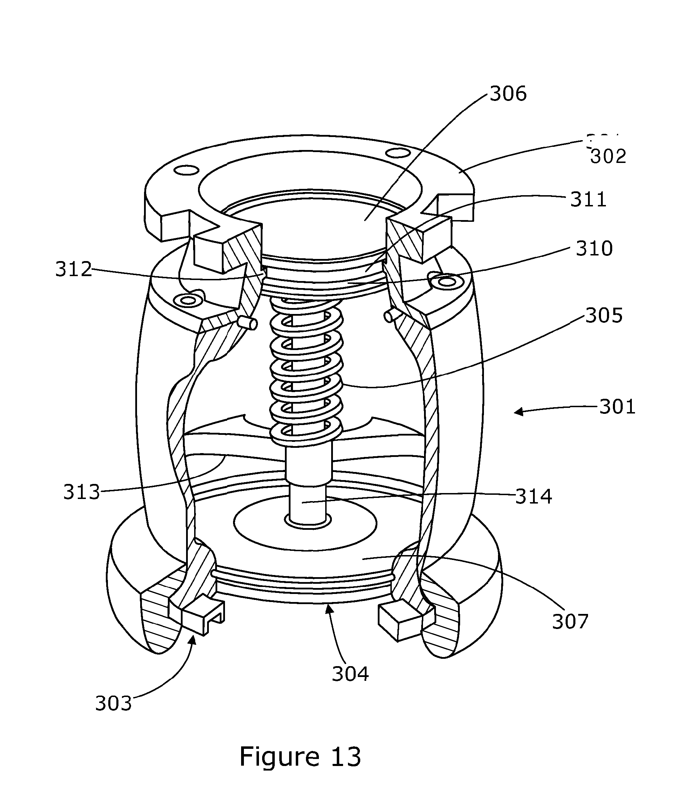

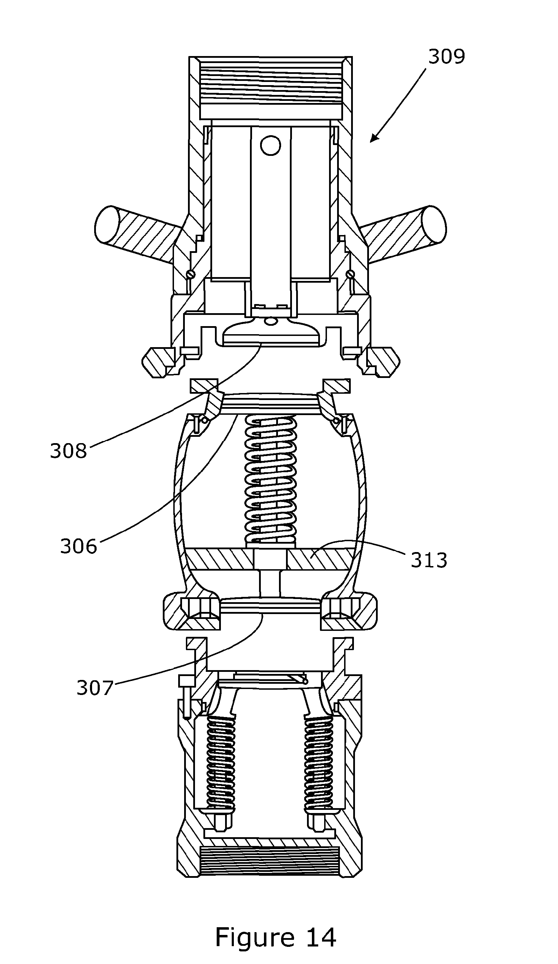

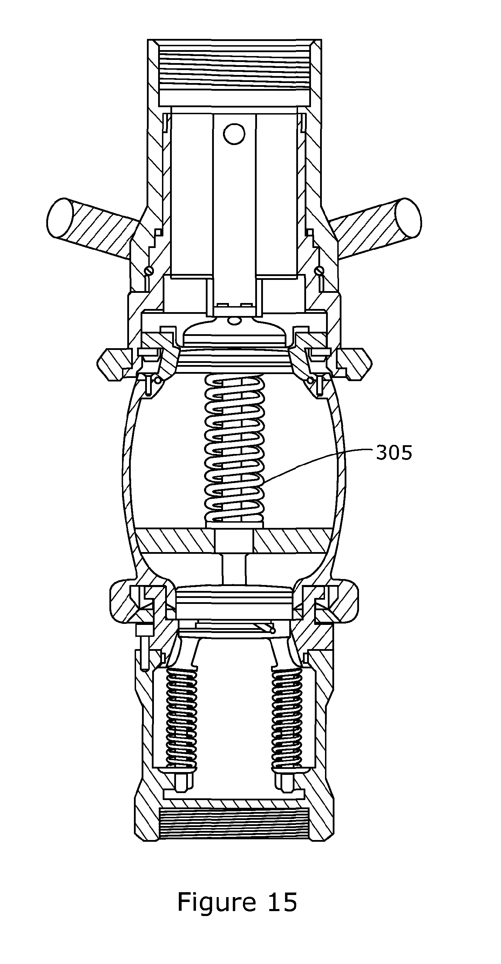

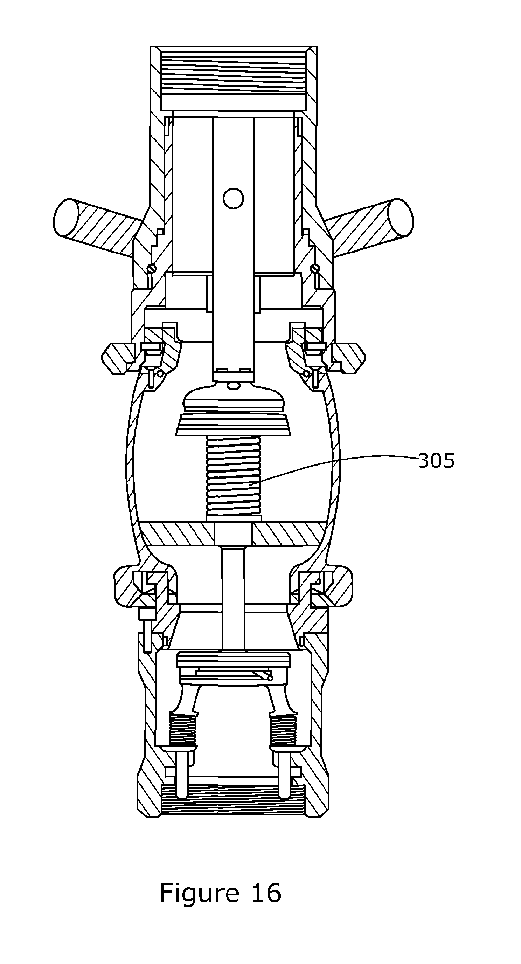

Figures 13 to 16 show an adapter for adapting the refuelling coupling to a pressure refuelling nozzle of a different size. Essentially the adapter 301 is generally tubular with a male fitting 302 at one end complementary to a pressure refuelling *nozzle* 309 and a female fitting 303 at the other end, which is complementary to the coupling fitting 301. Within the adapter is a shuttle 304, biased by a spring 305 for a male end piston 306 to seal the male tubular end and a female end piston 307 to seal the female tubular end. The shuttle is displaced on refuelling to release the seals and allow fuel to flow.

The male-end piston 306 is flat for dry-break co-operation with a displacement member 308 of the pressure refuelling nozzle 309. It carries a peripheral sealing O-ring 310 on its periphery 311, which is tapered for abutting with a seat 312 in the adapter. This abutment determines the position of the piston 306 under the action of the spring 305. Towards the other end of the adapter, it has a spider 313 with a central aperture for a rod 314 inter-connecting the piston 306,307. The spring acts between the spider and the inner side of the piston 306.

The piston 307 is similar in having an O-ring 315 carried in its parallel periphery 316. The adapter has a parallel bore 317 at this end, with which the piston 307 seals when in its normal position. On refuelling use, the female-end piston 307 moves out of the bore 317, and co-operates in a dry-break manner with the member 310 of the refuelling coupling.

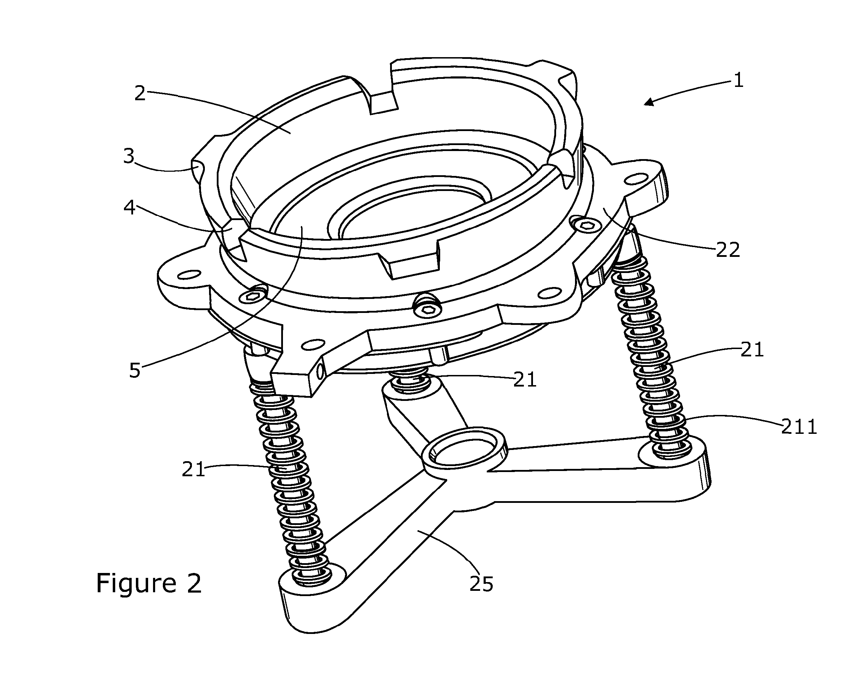

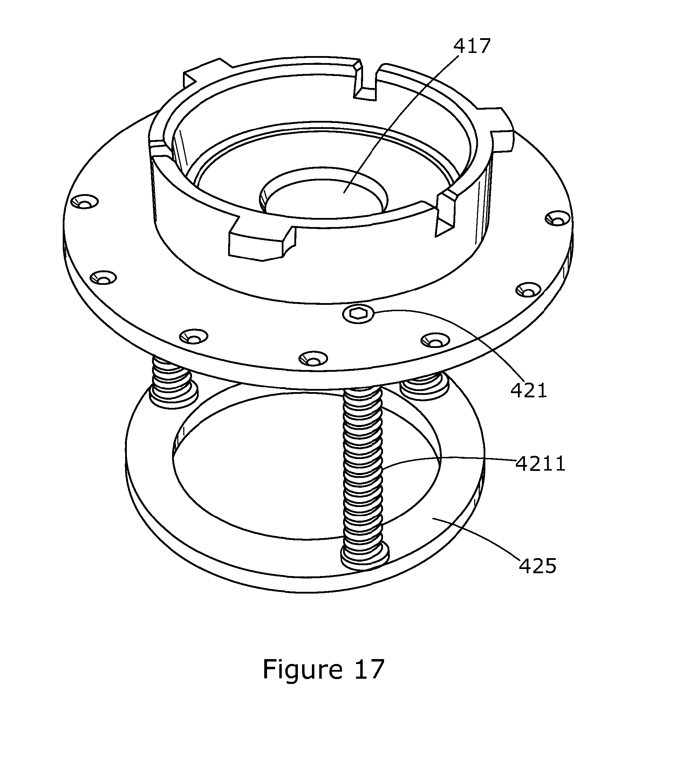

The invention is not intended to be restricted to the details of the above described embodiments. For instance as shown in Figure 17, the spider 25 of the coupling of Figure 2, holding the bottom ends of the rods 21 and against which the springs 211, can be replaced with a ring 425, equally holding rods 421 and providing abutment for the springs 4211. The advantage of the ring is that it enables fuel to be scavenged from a disabled vehicle by another vehicle fitted with a long pipe (not shown) at the end of a scavenge hose and pump system, the long pipe being able to be passed through the coupling's pivoted disc or flap 417 and through that the ring 425 towards the bottom of the tank of the vehicle having the coupling 425 and from which fuel is being scavenged.

## Claims

1. A refuelling coupling having:
• an annular member (1),
• a fitting (2,3,4) on the annular member complementary to a pressure refuelling nozzle (50) and
• a displaceable dry-break member (5) in the coupling for normally sealing the coupling via a seal (6) between the annular member (1) and the dry-break member (5), the dry-break member being displaceable from its sealing position on connection of a pressure refuelling nozzle (50), **characterised in that** the dry-break member (5) includes:
• an aperture (11) in the displaceable dry-break member and
• a subsidiary displaceable member (12) carried by the dry-break member, this subsidiary member (12) normally closing the aperture (11) and being displaceable by introduction of a gravity refuelling nozzle (52) into the aperture.

2. A refuelling coupling as claimed in claim 1, wherein the subsidiary displaceable member is translationally displaceable with respect to the displaceable dry-break member against a subsidiary return spring.

3. A refuelling coupling as claimed in claim 1, wherein the subsidiary displaceable member is pivotally displaceable with respect to the displaceable dry-break member against a subsidiary return spring (18).

4. A refuelling coupling as claimed in claim 3, wherein the subsidiary spring is a torsion spring arranged to act about a pivot (14) about which the subsidiary displaceable member is pivotally displaceable.

5. A refuelling coupling as claimed in any preceding claim, including a seal (19) for sealing of the subsidiary member to the dry-break member, whereby full dry-break operation is available when pressure refuelling.

6. A refuelling coupling as claimed in any preceding claim, wherein the main displaceable dry-break member is translationally displaceable in the coupling against at least one main return spring (211).

7. A refuelling coupling as claimed in claim 6, including a plurality of rods (21) secured in the coupling and on which the dry-break member is displaceably carried, the main return springs (211) being mounted on the rods and acting against abutments at the ends of the rods remote from the dry-break member.

8. A refuelling coupling as claimed in claim 7, wherein the abutments are provided by an abutment member in the form of a spider (25) or a ring interconnecting the remote ends of the rods.

9. A refuelling coupling as claimed in claim 7 or claim 8, including:
• an annular rim (27) or lip on or sealingly connectable to the annular member,
• a second annular rim (28) or lip member connectable to a wall of a fuel tank (54) and
• a sleeve or hose (30) securable to the annular rim for extension around the rods and to the second annular rim or lip member.

10. A refuelling coupling as claimed in claim 7, including a sleeve integrally or fixedly extending back from the annular member, the abutments being provided on the sleeve remote from the annular member.

11. A refuelling coupling as claimed in any preceding claim, including:
• an air vent (33) having a float (37) arranged to close as the tank fills for causing back-pressure in the connector when the tank is full and
• an airflow restricter (40-46) in a duct (34) of the air vent, the restricter being adapted to open to a limited extent to accommodate gravity refuelling air escape and to a greater extent to allow an increased air flow in the case of pressure refuelling.

12. A refuelling coupling as claimed in claim 11, wherein the restricter has:
• an apertured sleeve (42) mounted in the duct for movement axially thereof;
• a first spring (41) mounted on the sleeve for urging it against the direction airflow in the duct on refuelling;
• a first disc (40) carried by the sleeve and a seat in the duct, the spring normally urging the disc into contact with the seat to close the duct;
• an inner member mounted in the sleeve for movement axially thereof;
• a secondary spring (45) mounted on the inner member for urging it against the direction airflow in the duct on refuelling;
• a secondary disc (46) smaller than the first disc, carried by the inner member, and a secondary seat on the first disc around an aperture therein, the secondary spring normally urging the secondary disc into contact with the secondary seat to close the first disc,
the arrangement being such that on low air flow in the duct, as in gravity refuelling, the secondary disc moves from the secondary seat against the secondary spring and on high air flow in the duct, as in pressure refuelling, the first disc moves from the seat in the duct against the first spring (41).

13. An adapter for a refuelling coupling as claimed in any preceding claim, the adapter (301) being generally tubular and having:
• a fitting (302) at one end complementary to a pressure refuelling nozzle (309),
• a fitting (303) at the other end complementary to that on annular member and
• a shuttle (304) extending between the ends of the adapter, the shuttle being adapted
and arranged to be displaced by a displacement member of the pressure refuelling nozzle and to displace the displaceable dry-break member (5).

14. An adapter as claimed in claim 13, wherein the shuttle (304) has a spring (305) urging it towards the one end fitting.

15. An adapter as claimed in claim 14, wherein the shuttle has:
• a dry-break piston (306) at its one end adapted to be urged by the spring (305) against a seat in the adapter in sealing engagement with the one end of the adapter's tube and
• a dry-break piston (307) at its other end adapted to slidingly seal with the other end of the adapter's tube when the one-end dry-break piston (306) is against its seat, the arrangement being such that for refuelling with the shuttle (304) displaced, the one-end dry-break piston (306) is moved off its seat and the other-end dry-break piston (307) is moved out of sealing with the other end of the adapter's tube.

## Patentansprüche

1. Tankkupplung mit:
• einem Ringelement (1),
• einem Anschlussfitting (2, 3, 4) an dem Ringelement, das komplementär zu einem Druckbetankungsstutzen (50) ist, und
• einem verstellbaren Trocken-Trennelement (dry-break element) (5) in der Kupplung, um diese normalerweise über eine Dichtung zwischen dem Ringelement und dem Ventilelement (5) abzudichten, wobei das Trocken-Trennelement bei Anschluss eines Druckbetankungsstutzens (50) aus seiner Abdichtposition verstellbar ist, **dadurch gekennzeichnet, dass**
das Trocken-Trennelement (5) aufweist:
• eine Öffnung (11) in dem verstellbaren Trocken-Trennelement, und
• ein an dem Trocken-Trennelement angeordnetes Sekundär-Absperrelement (12), wobei das Sekundär-Element (12) die Öffnung (11) normalerweise verschließt und durch Einführung eines Schwerkraft-Tankstutzens (53) in die Öffnung verstellbar ist.

2. Tankkupplung nach Anspruch 1, **dadurch gekennzeichnet, dass** das Sekundär-Absperrelement translatorisch relativ zu dem verstellbaren Ventilelement entgegen der Wirkung einer Sekundär-Rückstellfeder verstellbar ist.

3. Tankkupplung nach Anspruch 1, **dadurch gekennzeichnet, dass** das Sekundär-Absperrelement schwenkbar relativ zu dem verstellbaren Ventilelement entgegen der Wirkung einer Sekundär-Rückstellfeder (18) verstellbar ist.

4. Tankkupplung nach Anspruch 3, **dadurch gekennzeichnet, dass** die Sekundärfeder eine Torsionsfeder ist, die um eine Schwenkachse (14) wirksam ist, um die das Sekundär-Absperrelement schwenkbar verstellbar ist.

5. Tankkupplung nach einem der vorhergehenden Ansprüche, **gekennzeichnet durch** eine Dichtung (19) zum Abdichten des Sekundärelements gegenüber dem Trocken-Trennelement, wodurch ein vollwertiger, trocken trennbarer Betrieb beim Druckbetanken möglich ist.

6. Tankkupplung nach einem der vorhergehenden Ansprüche, **dadurch gekennzeichnet, dass** das Primär-Trocken-Trennelement translatorisch in der Kupplung entgegen der Wirkung von wenigstens einer Haupt-Rückstellfeder (211) verstellbar ist.

7. Tankkupplung nach Anspruch 6, **gekennzeichnet durch** mehrere in der Kupplung angeordnete Stangen (21), längs derer das Trocken-Trennelement verstellbar geführt ist, wobei die Haupt-Rückstellfedern (211) auf den Stangen montiert sind und sich an Anschlägen an den Enden der Stangen entfernt von dem Trocken-Trennelement abstützen.

8. Tankkupplung nach Anspruch 7, **dadurch gekennzeichnet, dass** die Anschläge gebildet werden von einem Widerlagerelement in Form einer Spinne (25) oder eines Rings, das die entfernt gelegenen Enden der Stangen untereinander verbindet.

9. Tankkupplung nach Anspruch 7 oder 8, **gekennzeichnet durch**:
• einen ringförmigen Kranz (27) oder Randabschluss, der an dem Ringelement angeordnet oder an diesem abdichtend anschließbar ist,
• einen zweiten ringförmigen Kranz (28) oder Randabschlusselement, der bzw. das an einer Wand eines Brennstofftanks (54) anschließbar ist, und
• eine Manschette oder ein Schlauch (30), die bzw. der an dem ringförmigen Kranz oder Randabschluss die Stangen umgebend und an dem zweiten ringförmigen Kranz oder Randabschlusselement festlegbar ist.

10. Tankkupplung nach Anspruch 7, **gekennzeichnet durch** eine Manschette, die mit dem Ringelement einstückig ausgebildet oder an diesem fixiert ist und von diesem zurücksteht, wobei die Widerlager an der Manschette im Abstand von dem Ringelement angeordnet sind.

11. Tankkupplung nach einem der vorhergehenden Ansprüche, **gekennzeichnet durch**:
• eine Entlüftung (33) mit einem Schwimmer (37), der schließt, wenn sich der Tank füllt, um in dem Anschluss einen Gegendruck zu erzeugen, wenn der Tank voll ist, und
• einen Luftdurchlassbegrenzer (40-46) in einer Leitung (34) der Entlüftung, wobei der Begrenzer so ausgestaltet ist, dass er in eingeschränktem Umfang öffnet, um bei Schwerkraftbetankung ein Entweichen von Luft zu ermöglichen und bei Druckbetankung in größerem Maße öffnet, um einen erhöhten Luftdurchsatz zu erlauben.

12. Tankkupplung nach Anspruch 11, **dadurch gekennzeichnet, dass** der Begrenzer aufweist:
• eine offene Hülse (42), die axial beweglich in der Leitung angeordnet ist;
• eine erste Feder (41), die auf der Hülse so angeordnet ist, dass sie diese entgegen der Strömungsrichtung der Luft in der Leitung beim Betanken anstellt
• einen ersten Abschlusskörper (40) an der Hülse und einen Sitz in der Leitung, wobei die Feder den Abschlusskörper normalerweise in Kontakt mit dem Sitz in der Leitung anstellt, um diese zu verschließen;
• ein in der Hülse angeordnetes, axial zu dieser beweglich angeordnetes Innenteil;
• eine Sekundärfeder (45), die an dem Innenteil so angreift, dass sie dieses entgegen der Strömungsrichtung der Luft in der Leitung beim Betanken anstellt;
• ein Sekundär-Abschlusselement (46), das kleiner als der erste Abschlusskörper ist und von dem Innenteil getragen wird und einen Sekundär-Sitz an dem ersten Abschlusskörper, der um eine Öffnung in diesem angeordnet ist, wobei die Sekundärfeder das Sekundär-Abschlusselement normalerweise in Kontakt mit dem Sekundär-Sitz anstellt, um den Abschlusskörper zu verschließen,
wobei die Anordnung so getroffen ist, dass bei niedrigem Luftdurchsatz in der Leitung, wie er bei Schwerkraftbetankung auftritt, das Sekundär-Abschlusselement von dem Sekundär-Sitz entgegen der Wirkung der Sekundärfeder abhebt und bei hohem Luftdurchsatz in der Leitung, wie er bei Druckbetankung auftritt, der erste Abschlusskörper sich von dem Sitz in der Leitung entgegen der Wirkung der ersten Feder (41) abhebt.

13. Adapter für eine Tankkupplung nach einem der vorhergehenden Ansprüche, wobei der Adapter (301) im Allgemeinen rohrförmig ist und aufweist:
• ein Anschlussfitting (303) an einem Ende, das komplementär zu einem Druckbetankungsstutzen (309) ist
• ein Anschlussfitting (303) am anderen Ende, das komplementär zu einem solchen am Ringelement ist, und
• einen Schieber (304), der sich zwischen den Enden des Adapters erstreckt, welcher Schieber so ausgestaltet und angeordnet ist, dass er von einem Stellelement des Druckbetankungsstutzens verstellbar ist und das verstellbare Trocken-Trennelement (5) verstellt.

14. Adapter nach Anspruch 13, **dadurch gekennzeichnet, dass** der Schieber (304) eine Feder (305) aufweist, die ihn gegen das Anschlussfitting am einen Ende anstellt.

15. Adapter nach Anspruch 14, **dadurch gekennzeichnet, dass** der Schieber aufweist:
• einen Trocken-Trennkolben (306) an seinem einen Ende, der von der Feder (305) gegen einen Sitz in dem Adapter in abdichtenden Eingriff mit dem einen Ende des Adapterrohrs gedrückt wird, und
• einen Trocken-Trennkolben (307) an seinem anderen Ende, der für eine gleitende Abdichtung mit dem anderen Ende des Adapterrohrs angepasst ist, wenn der Trocken-Trennkolben (306) an dem einen Ende an seinem Sitz anliegt,
wobei die Anordnung so getroffen ist, dass beim Betanken mit dem verstellten Schieber der Trocken-Trennkolben (306) an dem einen Ende von seinem Sitz abgehoben wird und der andere Trocken-Trennkolben (307) aus seiner Abdichtung mit dem anderen Ende des Adapterrohrs verschoben wird.

## Revendications

1. Un accouplement de ravitaillement en carburant comprenant :
• un élément annulaire (1),
• une monture (2, 3, 4) sur l'élément annulaire, complémentaire d'une buse de ravitaillement en carburant sous pression (50),
et
• un élément mobile d'auto-obturation (5) dans l'accouplement pour étancher normalement l'accouplement par l'intermédiaire d'un joint (6) entre l'élément annulaire (1) et l'élément d'auto-obturation (5),
l'élément d'auto-obturation étant déplaçable de sa position d'étanchéité lors de la connexion d'une buse de ravitaillement en carburant sous pression (50), **caractérisé en ce que** l'élément d'auto-obturation (5) comprend :
• une ouverture (11) dans l'élément mobile d'auto-obturation et
• un élément déplaçable secondaire (12) porté par l'élément d'auto-obturation, ledit
élément secondaire (12) fermant normalement l'ouverture (11) et étant déplaçable par
introduction d'une buse de ravitaillement en carburant par gravité (52) dans l'ouverture.

2. Un accouplement de ravitaillement conforme à la revendication (1), dans lequel l'élément déplaçable secondaire est déplaçable en translation par rapport à l'élément mobile d'auto-obturation à l'encontre d'un ressort de rappel secondaire.

3. Un accouplement de ravitaillement conforme à la revendication 1, dans lequel l'élément déplaçable secondaire est déplaçable à pivotement par rapport à l'élément mobile d'auto-obturation à l'encontre d'un ressort de rappel secondaire (18).

4. Un accouplement de ravitaillement conforme à la revendication 3, dans lequel le ressort secondaire est un ressort de torsion disposé pour agir autour d'un pivot (14) autour duquel l'élément déplaçable secondaire est déplaçable à pivotement.

5. Un accouplement de ravitaillement conforme à l'une quelconque des revendications précédentes, comprenant un joint (19) pour étancher l'élément secondaire par rapport à l'élément d'auto-obturation, ce qui permet d'obtenir un fonctionnement entièrement auto-obturant lors du ravitaillement en carburant sous pression.

6. Un accouplement de ravitaillement conforme à l'une quelconque des revendications précédentes, dans lequel l'élément mobile d'auto-obturation principal est déplaçable en translation dans l'accouplement à l'encontre d'au moins un ressort de rappel principal (211).

7. Un accouplement de ravitaillement conforme à la revendication 6, comprenant une pluralité de tiges (21) fixées
dans l'accouplement et sur lesquelles l'élément d'auto-obturation est supporté de manière mobile, les ressorts de rappel principaux (211)
étant montés sur les tiges et agissant contre des butées aux extrémités des tiges distantes de l'élément d'auto-obturation.

8. Un accouplement de ravitaillement conforme à la revendication 7, dans lequel les butées sont constituées par un élément de butée en forme d'araignée (25)
ou par un anneau reliant entre elles les extrémités distantes des tiges.

9. Un accouplement de ravitaillement conforme à la revendication 7 ou à la revendication 8, comprenant :
• un bord annulaire (27) ou une lèvre sur l'élément annulaire ou apte à y être relié de manière étanche,
• un second bord annulaire (28) ou un élément de lèvre apte à être relié à une paroi d'un réservoir de carburant (54)
et
• un manchon ou flexible (30) apte à être fixé au bord annulaire pour s'étendre autour des tiges et jusqu'au second bord annulaire ou à l'élément de lèvre.

10. Un accouplement de ravitaillement conforme à la revendication 7, comprenant un manchon s'étendant depuis l'élément annulaire en faisant corps avec lui ou en y étant fixé, les butées étant disposées sur le manchon distant de l'élément annulaire.

11. Un accouplement de ravitaillement conforme à l'une quelconque des revendications précédentes, comprenant :
• un évent (33) comportant un flotteur (37)
conçu pour se fermer pendant que le réservoir se remplit pour créer une contre-pression dans le connecteur quand le réservoir est plein, et
• un restricteur de flux d'air (40-46) dans un conduit (34) de l'évent, le restricteur étant apte à s'ouvrir dans une mesure limitée pour autoriser un échappement d'air lors d'un ravitaillement en carburant par gravité ou dans une plus grande mesure pour admettre un flux d'air supérieur en cas de ravitaillement en carburant sous pression.

12. Un accouplement de ravitaillement conforme à la revendication 11, dans lequel le restricteur comprend :
• un manchon ajouré (42) monté dans le conduit pour le mouvement axial de celui-ci ;
• un premier ressort (41) monté sur le manchon pour le pousser à l'encontre du flux d'air directionnel dans le conduit lors du ravitaillement en carburant ;
• un premier disque (40) porté par le manchon et un siège dans le conduit, le ressort poussant normalement le disque au contact du siège pour fermer le conduit ;
• un élément intérieur monté dans le manchon pour le mouvement axial de celui-ci ;
• un ressort secondaire (45) monté sur l'élément intérieur pour le pousser à l'encontre du flux d'air directionnel dans le conduit lors du ravitaillement en carburant ;
• un disque secondaire (46) plus petit que le premier disque, porté par l'élément intérieur, et un siège secondaire sur le premier disque autour d'une ouverture ménagée dans celui-ci, le ressort secondaire poussant normalement le disque secondaire au contact du siège secondaire pour fermer le premier disque,
l'agencement étant tel qu'en cas de flux d'air réduit dans le conduit, comme lors d'un ravitaillement en carburant par gravité, le disque secondaire décolle du siège secondaire à l'encontre du ressort secondaire et, en cas de flux d'air élevé dans le conduit, comme lors d'un ravitaillement en carburant sous pression, le premier disque décolle du siège dans le conduit à l'encontre du premier ressort (41).

13. Un adaptateur pour un accouplement de ravitaillement en carburant conforme à l'une quelconque des revendications précédentes, l'adaptateur (301) étant globalement tubulaire et comprenant:
• une monture (302) à une extrémité, complémentaire d'une buse de ravitaillement en carburant sous pression (309),
• une monture (303)
• une navette (304)
s'étendant entre les extrémités de l'adaptateur, la navette étant conçue et agencée pour être déplacée par un élément de déplacement de la buse de ravitaillement en carburant sous pression et pour déplacer l'élément mobile d'auto-obturation (5).

14. Un adaptateur conforme à la revendication 13, dans lequel la navette (304) comporte un ressort (305) qui la pousse vers l'une des montures d'extrémité.

15. Un adaptateur conforme à la revendication 14, dans lequel la navette comprend :
• un piston d'auto-obturation (306) à sa première extrémité, conçu pour être poussé par le ressort (305) contre un siège dans l'adaptateur, en contact étanche avec l'une des extrémités du tube de l'adaptateur et
• un piston d'auto-obturation (307) à sa seconde extrémité, conçu pour étancher par coulissement l'autre extrémité du tube de l'adaptateur lorsque le piston d'auto-obturation (306) de la première extrémité est contre son siège,
l'agencement étant tel que, pour ravitailler en carburant avec la navette (304) déplacée, le piston d'auto-obturation (306) de la première extrémité est décollé de son siège et le piston d'auto-obturation (307) de la seconde extrémité est déplacé en annulant l'étanchéité avec l'autre extrémité du tube de l'adaptateur.
